# EUROPÄISCHE PATENTSCHRIFT

(11) **EP 0 557 580 B1**
(45) Veröffentlichungstag und Bekanntmachung des Hinweises auf die Patenterteilung: **12.06.1996**
(21) Anmeldenummer: 92117696.2
(22) Anmeldetag: 16.10.1992
(51) Int. Cl.: D04H 1/54, C08J 5/04

(54) **Verfahren zur Herstellung eines Innen-Ausstattungsteils für Fahrzeuge und solcherart hergestelltes Austattungsteil**
Method for production of vehicle interior lining and lining obtained by this method
Procédé pour la fabrication d'un élément de garniture intérieure pour des véhicules et élément ainsi obtenu

(30) Priorität: 22.02.1992 DE 4205464
(43) Veröffentlichungstag der Anmeldung: 01.09.1993
(73) Patentinhaber: Firma Carl Freudenberg, D-69469 Weinheim (DE)
(72) Erfinder: Föttinger, Walter, Dr., W-6940 Weinheim (DE); Hettenbach, Hans, W-6802 Ladenburg (DE); Grimm, Hansjörg, W-6940 Weinheim (DE); Hofmann, Petra, W-6900 Heidelberg (DE); Hauber, Michael, Dr., W-6940 Weinheim (DE); Schaut, Gerhard, Dr., W-6944 Hembach (DE)

(56) Entgegenhaltungen:
- EP-A- 0 078 702
- EP-A- 0 372 572
- WO-A-92/07898
- DE-A- 2 937 399
- US-A- 2 836 576
- US-A- 3 989 788
- US-A- 4 164 600

## Beschreibung

Die Erfindung befaßt sich mit der Herstellung eines Innen-Ausstattungsteils für Fahrzeuge, insbesondere eines Fahrzeughimmels, und mit einem nach diesem Verfahren hergestellten Ausstattungsteil.

Die Problematik bei Ausstattungsteilen für die Innenräume von Kraftfahrzeugen, insbesondere auch bei freihängenden Fahrzeughimmeln, besteht in der Anforderung, gegen Feuchtigkeit resistend zu sein und insbesondere hohe Wärmewerte, ohne durchzuhängen, zu überstehen. So ist bekannt, daß der Innenraum von Kraftfahrzeugen bei Sonneneinstrahlung, wie auch während des Lackierens im Herstellerwerk, Temperaturen bis zu 110°C aufweisen kann.

Ausstattungsteile aus Faservliesstoff, welche diese beiden Anforderungen erfüllen, enthalten oder bestehen aus Polyesterfasern und erreichen ihre Wärmestandfestigkeit durch eine Imprägnierung mit wärmehärtendem Kunstharz-Bindemittel, wie in der DE-OS 29 37 399 beschrieben, oder zusätzlich durch Beimischung von Glasfasern bis zu einer Menge von 100 Gew.-%, wie in DE-OS 36 29 230 beschrieben.

Diese bekannten Ausstattungsteile sind jedoch nicht recycelfähig wegen des Kunstharz- und/oder Glasfaser-Gehalts. Insbesondere ist es nicht möglich, den Grundstoff der Polyesterfasern entweder zu minderwertigem, wiederverwendbarem Polyestermaterial aufzuschmelzen und zu regranulieren oder gleichwertigen Polyester über Alkoholyse regenerativ zu gewinnen, da in jedem Falle gerade die die Wärmestandfestigkeit ausmachenden, zusätzlichen Werkstoffe nicht von den Polyesteranteilen vor dem Regenerieren befriedigend abtrennbar sind.

EP-A3-0 372 572 offenbart neuartige Bindefilamente mit einer speziellen chemischen Zusammensetzung aus Terephthal- und Glutarsäure oder deren Derivaten und einer Mischung aus Ethylenglycol und Diethylenglycol. Diese Bindefasern werden ersponnen und sind kristallin. Aus dem Fasermaterial kann auch der bindende Anteil von Bikomponentenfasern gebildet sein. Fasergemische unter Verwendung dieser Bindefasern können in der Hitze zu Formteilen, zum Beispiel Autohimmeln, verpreßt werden. Die entstandenen Produkte überstehen Lufttemperaturen von 100°C, ohne ihre Gestalt zu verlieren.

Der Anmelderin ist ein Stand der Technik bekannt, bei dem man im wesentlichen von DE-A-29 37 399 ausgeht, jedoch, gemäß dem soeben zitierten Stand der Technik, die Bindekomponente in Faserform verwendet. Bekannt ist dabei, daß man in einem mehrstufigen Verfahren zunächst ein Stapelfaservlies aus einer faserförmigen Matrix und einer faserförmigen Bindekomponente krempelt, anschließend das Vlies durch Nadeln und/oder flächige Wärmeeinwirkung vorverfestigt, dann den Vliesstoff in einem Vorwärmofen, der mit heißer Luft oder beheizten Platten betrieben wird, während einer bis fünf Minuten bei einer Temperatur verweilen läßt, welche 10 bis 30°C über der Schmelztemperatur der bindenden Komponente, jedoch unter der Schmelztemperatur der Matrix-Komponente liegt, und wobei man den resultierenden Vliesstoff in einem Formwerkzeug einem Formdurck aussetzt bei einer Temperatur, welche mindestens 10°C unter dem Schmelzpunkt der bindenden Komponente liegt.

Ausgehend hiervon hat die Erfindung zur Aufgabe, ein Verfahren zur Herstellung eines Innen-Austattungsteils für Fahrzeuge, insbesondere Fahrzeughimmel, anzugeben, welches die ausschließliche Verwendung von Polyesterfasern gestattet, einem Werkstoff, der kein wesentliches Wasseraufnahmevermögen aufweist, und wobei ohne Bindemittel-Imprägnierung oder Zusatz von Glasfasern dennoch eine Wärmestandfestigkeit erzielt werden kann, welche den Anforderungen der Fahrzeugindustrie genügt, was einem Wert des Elastizitätsmoduls bei Biegung gemäß der Norm EN 63, bei einer Prüftemperatur von 90°C, von mehr als 30 N/mm² entspricht, bei einer Dicke des Werkstoffs von 3 mm und einem Flächengewicht von 1000 g/m².

Ein solches erfindungsgemäßes Ausstattungsteil wird im Anspruch 7 beschrieben. Erfindungsgemäß wird diese Aufgabe mit einem gattungsgemäßen, mehrere Stufen aufweisenden Verfahren gelöst, welches umfaßt das Vlieslegen durch Krempeln, das Vorverfestigen durch Nadeln und/oder flächige Wärmeeinwirkung auf eine im Vlies vorhandene, an sich bekannte, niedriger schmelzende Komponente, das Aufheizen des so erhaltenen Vliesstoffs im Vorwärmofen und das Formen im Formwerkzeug zum fertigen Produkt. Dabei muß gemäß den Merkmalen des ersten Patentanspruchs vorgegangen werden.

Im einzelnen wird dabei so vorgegangen, daß man in einem mehrstufigen Verfahren zunächst ein Stapelfaservlies aus einer faserförmigen Matrix- und einer faserförmigen Bindekomponente krempelt. Anschließend führt man die Vorverfestigung dieses Vlieses durch Nadeln und/oder flächige Wärmeeinwirkung durch. Danach verweilt der so entstandene Vliesstoff in einem Vorwärmofen, der mit heißer Umluft oder beheizten Platten betrieben wird, für 1 bis 5 Minuten bei einer Temperatur, welche 10 bis 30°C über der Schmelztemperatur der Bindekomponente, jedoch unter der Schmelztemperatur der Matrix-Komponente liegt. Danach setzt man den Vliesstoff in einem Formwerkzeug einem Formdruck aus bei einer Temperatur, welche mindestens 10°C unter der dem Schmelzpunkt der Bindekomponente liegt.

Für die Matrix-Komponente verwendet man Fasern aus verstrecktem Polyethylenterephthalat, für die Bindekomponente 30 bis 120°C niedriger als die Matrix-Fasern schmelzende Copolyester-Fasern. Man wählt dabei für die Matrix- und Bindekomponente Fasern mit Stapellängen von 15 bis 100 mm und Titer von 4 bis 30 dtex. Die Bindekomponente nimmt mindestens 40 Gew.-% des Vliesstoffs ein.

Besonders wesentlich für die Erfindung ist, daß man in einer separaten Stufe die Matrix-Komponente bei einer Temperatur von 140 bis 240°C während einer Zeitdauer von einer Minute bis 2 Stunden tempert.

Der Formdruck in dem dem fertigen Ausstattungsteil entsprechend geformten Formwerkzeug beträgt zweckmäßig 10⁵ bis 2 x 10⁶ Pa bei einer Verweildauer von 0,2 bis 2 Minuten, wonach das fertige Ausstattungsteil der Form entnommen werden kann. Dieser Verfahrensschritt erfolgt also konventionell.

Das Tempern, welches sich offenbar gezielt auf das vorverstreckte Polyethylenterephthalat auswirkt, leitet wahrscheinlich dessen Kristallalisation ein und führt so zu einer signifikanten Verbesserung der Wärmestandfestigkeit, verglichen mit ungetempertem Material.

Gemäß einer vorteilhaften Ausgestaltung kann man das Tempern bei 140 bis 200°C während 2 Stunden bis einer Minute innerhalb des Verfahrensschritts der Vorverfestigung des Vlieses vornehmen.

Gemäß einer weiteren vorteilhaften Ausgestaltung der Erfindung wird das Ausstattungsteil, anschließend an das Verlassen des Formwerkzeugs, einer Temperbehandlung ausgesetzt bei 140 bis 200°C und innerhalb 2 Stunden bis 2 Minuten. Die Temperatur muß dabei mindestens 10°C unter derjenigen der Bindekomponente liegen. Wiederum setzt offenbar ein Kristallisieren des vorverstreckten Polyethylenterephthalats ein und bewirkt eine signifikante Erhöhung der Wärmefestigkeit des Ausstattungsteils.

Zusammenfassend besteht also die Möglichkeit, im Rahmen der Erfindung ein Vortempem durchzuführen während des Verfahrensschritts der Vorverfestigung. Bereits dadurch wird eine deutliche Erhöhung der Wärmefestigkeit erreicht. Ähnliche Ergebnisse erzielt man durch alleiniges Nachtempern, anschließend an das Formen.

Ein weiterer Vorteil des erfindungsgemäßen Verfahrens besteht darin, daß man ein Ausstattungsteil erhält, welches sehr leicht ist, da es zur Erhöhung der Wärmestandfestigkeit keiner Bindemittel-Imprägnierung bedarf.

Es war nicht zu erwarten, daß das Tempern eines im Vliesstoff vorhandenen, vorverstreckten Polyethylenterephthalat-Matrixfaser-Anteils die Festigkeitseigenschaften in der Wärme am fertigen Produkt derart deutlich beeinflußt. Auch war nicht vorherzusehen, an welcher Stelle des Verfahrens dieses Tempern vorteilhaft durchzuführen wäre.

Eine Variante der verwendeten Werkstoffe besteht darin, 50 bis 100 Gew.-% Bikomponentenfasern Seite-an-Seite-Anordnung oder Kern-/Mantel-Anordnung einzusetzen, wobei der Kern bzw. eine Seite die Matrix-Komponente und die andere Seite bzw. der Mantel die Bindekomponente darstellt. Diese Version ist besonders einfach zu verarbeiten und bringt, wie noch in den Beispielen gezeigt wird, beste Resultate.

Es ist jedoch auch möglich, im Rahmen der Erfindung 40 bis 90 Gew-% einer separaten Bindefaser zu verwenden mit einem Titer von 4 bis 8 dtex, bestehend aus unter 240°C schmelzendem Copolyester.

Um das Ausstattungsteil, insbesondere einen Fahrzeughimmel, besonders steif auszustatten, besteht eine bevorzugte Variante des erfindungsgemäßen Verfahrens darin, als Vliesstoffgrundlage ein dreischichtiges Laminat einzusetzen, dessen beide Außenschichten zu 100 % aus Kern/Mantel-Fasern bestehen. Der Kern ist verstrecktes Polyethylenterephthalat mit einer Schmelztemperatur von 260°C; der Mantel wird gebildet aus bei 200°C schmelzendem Copolyester. Diese Fasern sind im Handel erhältlich und somit leicht zugänglich. Die Mittelschicht wird gebildet aus 80 Gew.-% der gleichen Fasertype wie die Außenschichten, aus 10 Gew.-% verstreckten Polyethylenterephthalat-Fasern mit einem Titer von 17 dtex und aus 10 Gew.-% verstreckten Polyethylenterephthalat-Fasern mit einem Titer von 6 dtex. Die Außenschichten sind dabei etwas steifer als die Innenschicht, das Laminat hat einen sich angenehm anfühlenden, polsterartigen Charakter.

In den nachfolgenden Beispielen werden die positiven Ergebnisse der Erfindung näher erläutert:

Ein dreischichtiges Vliesstoff-Laminat wurde durch Krempeln, Nadeln und thermisches Vorverfestigen hergestellt, im Vorwärmofen behandelt während 3 Minuten bei einer Umlufttemperatur von 170°C und anschließend im Formwerkzeug bei 5 x 10⁵ Pa während einer Dauer von 1,5 Minuten verformt. Die Temperatur betrug dabei 120°C.

Die Außenschichten bestanden zu jeweils 100 % aus 6 dtex Bikomponentenfasern mit einer Stapellänge von 60 mm und einem Kern aus verstrecktem Polyethylenterephthalat, Schmelztemperatur 260°C, sowie einem Mantel aus Copolyester, Schmelzpunkt 200°C. Die Fasern wurden im Handel erworben unter der Bezeichnung "Unitika 2080" von der Firma Unitika, Japan.

Die Mittelschicht wurde hergestellt zu 80 Gew.-% aus den genannten Kern-Mantel-Fasern, zu 10 Gew.-% aus einfachen, verstreckten Polyethylenterephthalat-Fasern mit einem Titer von 17 dtex und zu 10 Gew.-% aus verstreckten Polyethylenterephthalat-Fasern mit einem Titer von 6 dtex.

Jeweils ein solches, dreischichtiges Flächengebilde wurde bei sonst gleichen Herstellungsbedingungen einer Temperbehandlung in verschiedenen Phasen des Herstellungsverfahrens ausgesetzt:
Zunächst wurde das Material in 5 verschiedene Gruppen eingeteilt, die hier jeweils einer anderen thermischen Vorbehandlung unterzogen wurden.
1) Das Material wurde nur vorgenadelt, ohne weitere thermische Behandlung.
2) Das Material analog 1) wurde zusätzlich einer Temperaturbehandlung von 150°C während 2 Stunden ausgesetzt.
3) Das Material analog 1) wurde einer Temperaturbehandlung von 220°C während 3 Minuten ausgesetzt.
4) Das Material analog 3) wurde einer weiteren Temperaturbehandlung von 150°C während 2 Stunden ausgesetzt.
5) Das Material analog 1) wurde einer Temperaturbehandlung von 220°C über 2 Stunden ausgesetzt.

Alle Materialien wurden anschließend zwischen 2 geheizten Platten während 3 Minuten bei einer Temperatur von 250°C vorgewärmt. Die weiteren Behandlungen erfolgten jeweils auf folgende unterschiedliche Weise:
a) Verformung 3 mm in einem Werkzeug von Raumtemperatur mit 1 Minute Verweilzeit.
b) Analog a), jedoch Verformung mit einem Werkzeug von 125°C mit 1 Minute Verweilzeit.
c) Analog a), jedoch Verformung mit einem Werkzeug von 185°C mit 30 Minuten Verweilzeit.
d) Nach Variante a) erhaltenes Material wurde einer zusätzlichen Wärmebehandlung außerhalb des Werkzeugs von 150°C 2 Stunden ausgesetzt.
e) Nach Variante b) erhaltenes Material wurde außerhalb des Werkzeugs einer weiteren zusätzlichen Wärmebehandlung von 150°C 2 Stunden ausgesetzt.

Von allen 25 Proben wurde der Elastizitäts-Modul bei Biegung gemäß der Norm EN 63 bei 90°C gemessen. Von einem Teil der Proben wurden außerdem die entsprechenden Werte bei Raumtemperatur von 23°C gemessen.

Tabelle 1 gibt den Vergleich der Werte bei beiden Temperaturen von einigen ausgewählten Proben wieder.

Tabelle 2 zeigt den E-Modul bei Biegung bei 90°C von sämtlichen 25 Proben wie oben beschrieben.

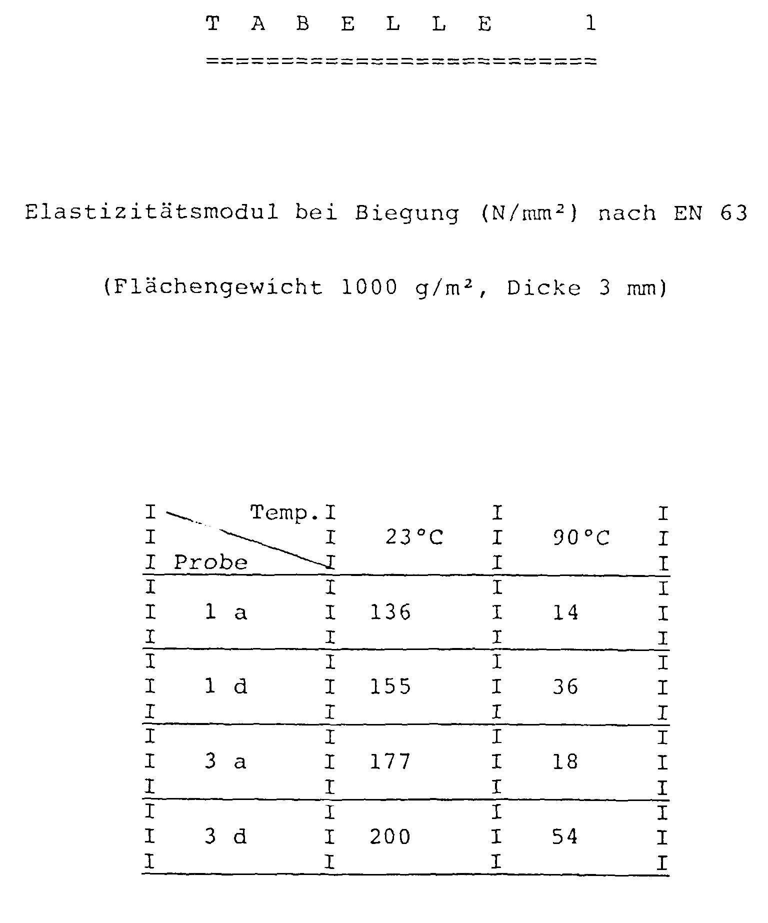

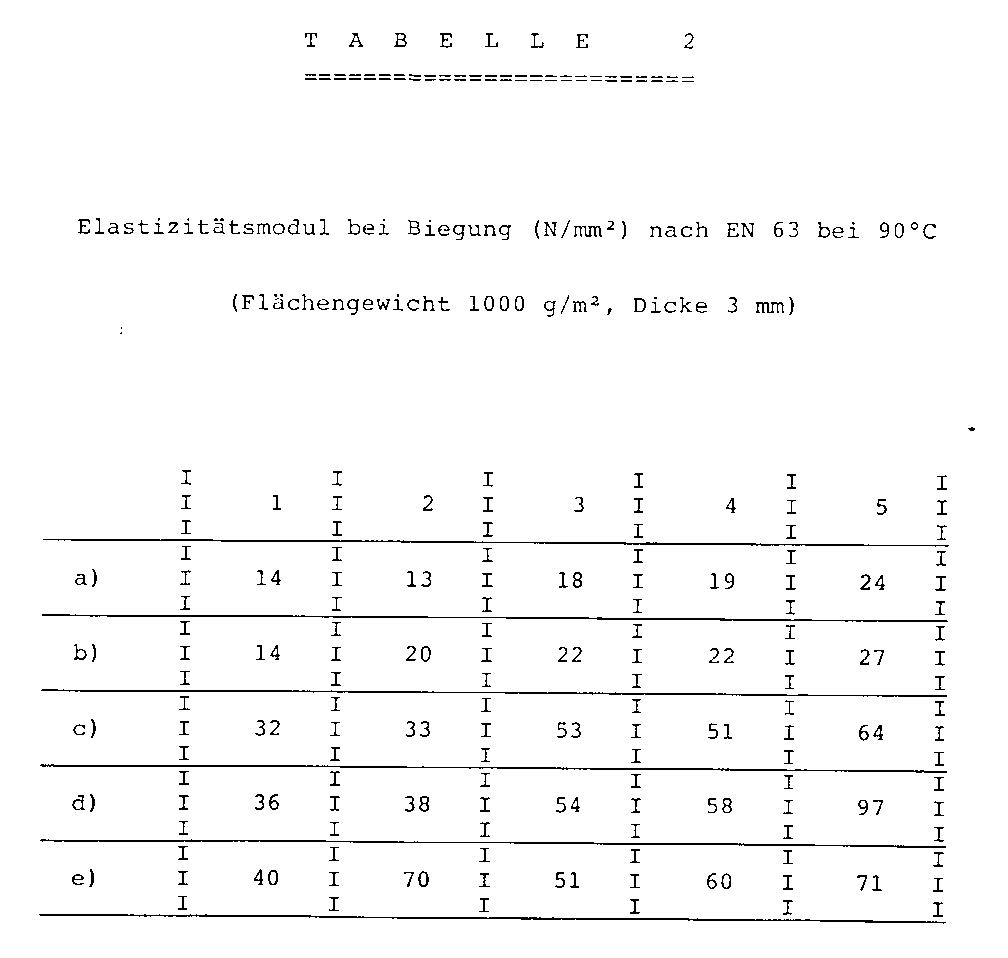

## Patentansprüche

1. Verfahren zur Herstellung eines Innen-Ausstattungsteils für Fahrzeuge, insbesondere eines Autohimmels, bei dem man in einem mehrstufigen Verfahren zunächt ein Stapelfaservlies aus einer faserförmigen Matrix- und einer faserförmigen Bindekomponente krempelt, anschließend das Vlies durch Nadeln und/oder flächige Wärmeeinwirkung vorverfestigt, dann den Vliesstoff in einem Vorwärmofen, der mit heißer Umluft oder beheizten Platten betrieben wird, während 1 bis 5 Minuten bei einer Temperatur verweilen läßt, welche 10 bis 30°C über der Schmelztemperatur der bindenden Komponente, jedoch unter der Schmelztemperatur der Matrix-Komponente liegt, und wobei man den resultierenden Vliesstoff in einem Formwerkzeug einem Formdruck aussetzt bei einer Temperatur, welche mindestens 10°C unter dem Schmelzpunkt der bindenden Komponente liegt, wobei man als Matrixkomponente verstrecktes Polyethylenterephthalat verwendet, daß man als Bindekomponente 30 bis 120°C niedriger als die Matrixfasern schmelzende Copolyester verwendet, wobei man für die Matrix- und Bindekomponente Fasern mit Stapellängen von 15 bis 100 mm und Titer von 4 bis 30 dtex wählt, daß man die Bindekomponente zu mindestens 40 Gew.-% einsetzt und daß man in einer separaten Stufe die Matrix-Komponente bei einer Temperatur von 140 bis 240°C während einer Zeitdauer von einer Minute bis 2 Stunden tempert.

2. Verfahren nach Anspruch 1, dadurch gekennzeichnet, daß man das Tempern bei 140 bis 240°C während 2 Stunden bis einer Minute innerhalb des Verfahrensschritts der Vorverfestigung des Vlieses vornimmt.

3. Verfahren nach Anspruch 1 oder 2, dadurch gekennzeichnet, daß man das Tempern bei 140 bis 200°C, mindestens jedoch bei 10°C unter dem Schmelzpunkt der bindenden Komponente, vornimmt für 2 Stunden bis 2 Minuten, und zwar nach dem Verlassen des Formteils aus dem Formwerkzeug.

4. Verfahren nach einem der Ansprüche 1 bis 3, dadurch gekennzeichnet, daß man als Bindekomponente 50 bis 100 Gew.-% Bikomponentenfasern in Seite/Seite- oder Kern-/Mantel-Anordnung einsetzt, wobei ein Bestandteil vorverstrecktes Polyethylenterephthalat und der andere Bestandteil der niedriger schmelzende Copolyester ist.

5. Verfahren nach einem der Ansprüche 1 bis 3, dadurch gekennzeichnet, daß man 40 bis 90 Gew.-% einer separaten Bindefaser verwendet mit einem Titer von 4 bis 8 dtex, bestehend aus unter 240°C schmelzendem Copolyester.

6. Verfahren nach einem der vorhergehenden Ansprüche, dadurch gekennzeichnet, daß man einen dreilagigen Vliesstoff verarbeitet, wobei man die beiden Außenlagen aus 6 dtex-Kern/Mantel-Fasern bildet, deren Kern aus verstrecktem, bei 260°C schmelzendem Polyethylenterephthalat besteht und deren Mantel-Material ein bei 200°C schmelzender Copolyester ist, und wobei man die Innenlage herstellt aus 80 Gew.-% Fasern wie in der Außenlage, 10 Gew. -% verstreckten Polyethylenterephthalat-Fasern mit einem Titer von 17 dtex und 10 Gew.-% Polyethylenterephthalat-Fasern mit einem Titer von 6 dtex.

7. Innen-Ausstattungsteil, insbesondere Autohimmel, hergestellt nach dem Verfahren nach einem der vorangehenden Ansprüche, wobei das Ausstattungsteil ausschließlich Polyesterfasern enthält, keine Bindemittel-lmprägnierung und keine Glasfasem aufweist und daß es einen Elastizitätsmodul bei Biegung gemäß Euronorm EN 63 von mehr als 30 N/mm² besitzt, gemessen bei einer Prüftemperatur von 90°C, einer Dicke des Werkstoffs von 3 mm und einem Flächengewicht von 1000 g/m2.

## Claims

1. A method for the production of a vehicle interior lining, in particular a roofliner, involving a multistage process in which first of all a staple-fibre nonwoven is carded from a fibrous matrix component and a fibrous binder component, the nonwoven is subsequently prebonded by needling and/or applying heat over its surface area, then the nonwoven fabric is left for 1 to 5 minutes in a preheating oven, which is operated with hot circulating air or heated plates, at a temperature which is 10 to 30°C above the melting temperature of the binding component, but below the melting temperature of the matrix component, and the resulting nonwoven fabric is subjected to a forming pressure in a forming mould at a temperature which is at least 10°C below the melting point of the binding component, stretched polyethyleneterephthalate being used as the matrix component and a copolyester which melts 30 to 120°C lower than the matrix fibres being used as the binder component, fibres having staple lengths of from 15 to 100 mm and linear densities of from 4 to 30 dtex being chosen for the matrix and binder components, the binder component being used in a proportion of at least 40 % by weight and the matrix component being conditioned for a period of from one minute to 2 hours at a temperature of from 140 to 240°C in a separate stage.

2. The method according to claim 1, characterized in that the conditioning is performed at 140 to 240°C for anything from 2 hours to one minute within the method step of prebonding the nonwoven.

3. The method according to either of claims 1 and 2, characterized in that the conditioning is performed at 140 to 200°C, but at least 10°C below the melting point of the binding component, for anything from 2 hours to 2 minutes, after the moulding has left the forming mould.

4. The method according to any one of claims 1 to 3, characterised in that 50 to 100 % by weight of bicomponent fibres in side/side or core/sheath arrangement are used as the binder component, one constituent being prestretched polyethyleneterephthalate and the other constituent being the lower-melting copolyester.

5. The method according to any one of claims 1 to 3, characterized in that 40 to 90% by weight of a separate binding fibre is used, having a linear density of from 4 to 7 dtex, composed of copolyester which melts below 240°C.

6. The method according to any one of the preceding claims, characterized in that a three-ply nonwoven fabric is processed, the two outer plies being formed from 6 dtex core/sheath fibres, the core of which is composed of stretched polyethyleneterephthalate which melts at 260°C, and the sheath material of which is a copolyester which melts at 200°C, and the inner ply being produced from 80% by weight of fibres as in the outer ply, 10% by weight of stretched polyethyleneterephthalate fibres having a linear density of 17 dtex and 10% by weight of polyethyleneterephthalate fibres having a linear density of 6 dtex.

7. An interior lining, in particular a roofliner, produced by the method according to any one of the preceding claims, the lining exclusively containing polyester fibres, having no binder impregnation and no glass fibres and having a flexural modulus of elasticity according to European Standard EN 63 of more than 30 N/mm², measured at a test temperature of 90°C, with a thickness of the material of 3 mm and a weight per unit area of 1000 g/m².

## Revendications

1. Procédé pour la fabrication d'un élément de garniture intérieure pour des véhicules, notamment d'un habillage de plafond d'automobiles, comportant plusieurs étapes qui consistent d'abord à carder une nappe de fibres discontinues comportant un composant de matrice en forme de fibres et un composant de liage en forme de fibres, ensuite à présolidifier la nappe par aiguilletage et/ou sous l'influence de chaleur exercée sur sa surface, puis à maintenir l'étoffe non-tissée dans un four de préchauffage à circulation d'air chaud ou à plaques chauffantes pendant 1 à 5 minutes à une température qui est de 10°C à 30°C supérieure à la température de fusion du composant de liage, mais inférieure à la température de fusion du composant de matrice, l'étoffe non-tissée ainsi obtenue étant soumise dans un outil de formage à une pression de formage à une température qui est au moins de 10 degrés inférieure au point de fusion du composant liant, comme composant de matrice étant utilisé du téréphtalate de polyéthylène étiré, à utiliser comme composant de liage du copolyester fondant à une température de 30 à 120°C inférieure à celle des fibres de matrice, des fibres coupées à des longueurs de 15 à 100 mm et des titres de 4 à 30 décitex étant choisis pour les composants de matrice et de liage, à utiliser le composant de liage au moins à 40 % en poids et à recuire le composant de matrice, dans une étape séparée, à une température de 140°C à 240°C pendant une durée allant d'une minute à 2 heures.

2. Procédé selon la revendication 1, caractérisé en ce que l'on effectue le recuit à une température de 140°C à 240°C pendant 2 heures jusqu'à une minute durant l'étape de procédé de la présolidification de la nappe.

3. Procéde selon la revendication 1 ou 2, caractérisé en ce que l'on effectue le recuit à une température de 140°C à 200°C, mais au moins à une température de 10°C inférieure au point de fusion du composant liant, pendant 2 heures à 2 minutes et ceci après la sortie de la pièce formée de son outil de formage.

4. Procédé selon l'une des revendications 1 à 3, caractérisé en ce que l'on utilise comme composant de liage 50 à 100 % en poids des fibres à 2 composants disposés côte/côte ou âme/couverture, l'un des composants étant du térephtalate de polyéthylène préétiré, l'autre le copolyester fondant à une faible température.

5. Procédé selon l'une des revendications 1 à 3, caractérisé en ce que l'on utilise 40 à 90 % en poids d'une fibre de liage séparée ayant un titre de 4 à 8 dtex et consistant en copolyester fondant à moins de 240°C.

6. Procédé selon l'une des revendications précédentes, caractérisé en ce que l'on travaille une étoffe non-tissée de trois couches, les deux couches extérieures étant formées par des fibres âme/couverture de 6 décitex, dont l'âme consiste en térephtalate de polyéthylène étiré fondant à 260°C et dont la matière de couverture est un copolyester fondant à 200°C, étant précisé que la couche intérieure est réalisée à 80 % en poids de fibres identiques à celles utilisées dans la couche extérieure, à 10 % en poids de fibres étirées de térephtalate de polyéthylène ayant un titre de 17 décitex et à 10% en poids de fibres de térephtalate de polyéthylène ayant un titre de 6 décitex.

7. Elément de garniture intérieure, notamment habillage de plafond d'automobiles, réalisé conformément au procédé selon l'une des revendications précédentes, l'élément de garniture comprenant uniquement des fibres polyester, mais pas d'imprégnation du liant et pas de fibres de verre et possédant un module d'Young de plus de 30 N/mm² en cas de flexion selon l'euronorme EN 63, mesuré à une température d'essai de 90°C, à une épaisseur du matériau de 3 mm et à un poids au m² de 1000 grammes.
